# NEUE EUROPÄISCHE PATENTSCHRIFT

(11) **EP 2 536 531 B2**
(45) Veröffentlichungstag und Bekanntmachung des Hinweises auf die Entscheidung über den Einspruch: **15.12.2021**
(45) Hinweis auf die Patenterteilung: 28.11.2018
(21) Anmeldenummer: 11703184.9
(22) Anmeldetag: 02.02.2011
(51) Int. Cl.: B24B 33/02

(54) **WERKZEUGMASCHINE UND VERFAHREN ZUM BEARBEITEN EINES WERKSTÜCKS**
MACHINE TOOL AND METHOD FOR MACHINING A WORKPIECE
MACHINE-OUTIL ET PROCÉDÉ POUR L'USINAGE D'UNE PIÈCE

(30) Priorität: 17.02.2010 DE 102010002019
(43) Veröffentlichungstag der Anmeldung: 26.12.2012
(73) Patentinhaber: MAG IAS GmbH, 73033 Göppingen (DE)
(72) Erfinder: GOLZ, Hans-Ulrich, 08525 Plauen (DE); BAYHA, Thomas, 71706 Markgröningen (DE); ABELN, Tobias, 70599 Stuttgart (DE)
(74) Vertreter: Hoeger, Stellrecht & Partner Patentanwälte mbB
(86) Internationale Anmeldenummer: PCT/EP2011/051445
(87) Internationale Veröffentlichungsnummer: WO 2011/101243

(56) Entgegenhaltungen:
- EP-A1- 0 390 938
- WO-A1-2009/129925
- DE-A1- 2 405 694
- DE-A1- 3 106 800
- DE-A1- 10 225 514
- DE-A1- 19 717 835
- DE-A1-102007 045 045
- DE-T2- 69 228 175
- US-A- 4 463 490

## Beschreibung

Die Erfindung betrifft eine Werkzeugmaschine, umfassend mindestens eine Werkzeugspindel, an welcher ein Werkzeug lösbar fixierbar ist und über welche das Werkzeug rotierbar ist, und einen Werkstückträger, wobei die mindestens eine Werkzeugspindel und der mindestens eine Werkstückträger relativ zueinander verschieblich sind.

Die Erfindung betrifft ferner ein Verfahren zum Bearbeiten eines Werkstücks mit unterschiedlichen Werkzeugen.

Aus der DE 10 2006 034 497 A1 ist ein Verfahren zur Feinbearbeitung von Innenflächen von Bohrungen in Werkstücken durch Feinbohren und nachfolgendes Honen mit den Schritten Feinbohren einer Bohrung eines Werkstücks mittels eines Feinbohrwerkzeugs einer Feinbohreinrichtung und Transfer des Werkstücks in eine Bearbeitungsposition einer Honeinrichtung zur Bearbeitung der feingebohrten Bohrung mittels eines Honwerkzeugs der Honeinrichtung bekannt.

Aus der DE 10 2007 045 045 A1 ist ein Verfahren zur Bearbeitung eines Werkstücks bekannt, bei dem das Werkstück an einem Werkstückträger einer Werkzeugmaschine festgelegt wird und das Werkstück in seinem an dem Werkstückträger festgelegten Zustand mittels eines Vorbereitungswerkzeugs spanend vorbearbeitet wird und das vorbearbeitete Werkstück mittels eines Honwerkzeugs honend bearbeitet wird. Außerdem offenbart diese Druckschrift eine Werkzeugmaschine, umfassend mindestens eine Werkzeugspindel, an welcher ein Werkzeug lösbar fixierbar ist und über welche das Werkzeug rotierbar ist, und mindestens einen Werkstückträger, wobei die mindestens eine Werkzeugspindel und der mindestens eine Werkstückträger relativ zueinander verschieblich sind, wobei die mindestens eine Werkzeugspindel an einer Trägereinrichtung gehalten ist und mindestens in einer ersten Richtung (X) und in einer quer zur ersten Richtung (X) liegenden zweiten Richtung (Y) verschieblich ist, der mindestens eine Werkstückträger in Z-Richtung verschieblich an einem Maschinenbett gehalten ist, die mindestens eine Werkzeugspindel ein Gehäuse und eine in dem Gehäuse gelagerte hydraulische Beaufschlagungseinrichtung umfasst, welche auf mindestens eine linear bewegliche Stange eines Werkzeugs, welches an der mindestens einen Werkzeugspindel fixiert ist, einwirkt, wobei mindestens ein Werkzeug vorgesehen ist, das an der mindestens einen Werkzeugspindel fixierbar ist und eine Stange aufweist, auf welche die Beaufschlagungseinrichtung der mindestens einen Werkzeugspindel wirkt, wenn ein Werkzeug an der mindestens einen Werkzeugspindel fixiert ist.

Aus der DE 10 2006 028 728 A1 ist ein Honwerkzeug zum Fertig-Honen von Bohrungen in einem Werkstück mit mindestens einer Honleiste, einer Einstellvorrichtung zur Einstellung des Durchmessers des Honwerkzeugs im Bereich der mindestens einen Honleiste, einer Schnittstelle zum Verbinden des Honwerkzeugs mit einer herkömmlichen Maschinenspindel oder einem herkömmlichen Adapter, Zwischenstück dergleichen und einer in das das Honwerkzeug integrierten Antriebseinheit zur Betätigung der Einstellvorrichtung bekannt.

Aus der DE 198 59 051 A1 ist ein Verfahren zur spanabtragenden Bearbeitung eines Werkstücks zur Erzeugung einer nicht ebenen Oberfläche, insbesondere eines Ventilsitzes, mittels eines Werkzeugs mit einer von einer Halterung aufgenommenen Messerplatte aufweisenden Grundkörper bekannt.

Aus der EP 0 780 192 B2 ist eine Spindeleinheit für Werkzeugmaschinen bekannt.

Aus der US 7,070,491 B2 ist ein Honwerkzeug mit einem Fluidaktuator bekannt.

Aus der GB 1 259 071 ist ein Werkzeughalter bekannt, welcher einen Schlitten umfasst, an welchem ein Werkzeug fixierbar ist. Der Schlitten ist radial beweglich bezüglich eines Teils, welches auf einer rotierbaren Spindel einer Werkzeugmaschine fixierbar ist. In diesem Teil ist ein reversibler elektrischer Motor montiert, welcher die relative radiale Bewegung antreibt.

Aus der DE 102 25 514 B4 ist eine Maschine zur Feinstbearbeitung für Werkstücke durch Honen mit einer von einem Elektromotor antreibbaren in einem Spindelgehäuse gelagerten Honspindel bekannt, deren Hubbewegung durch einen Linearmotor bewirkt wird, an dessen beweglichem Sekundärteil das Spindelgehäuse angeordnet ist, und bei der in der Honspindel eine Aufweitstange, mitdrehend und in dieser durch einen Servomotor axial verschiebbar, angeordnet ist, die zur Aufweitung eines an der Honspindel angeordneten Honwerkzeugs dient.

Aus der DE 39 18 034 C2 ist ein Schneidwerkzeug für die Bearbeitung von Innenkonturen und Außenkonturen an einem Werkstück mit mindestens einem Schneidplattenträger, der durch eine Spannschraube gegen eine Auflagefläche an einen Werkzeuggrundkörper gespannt ist und wenigstens einem zum Positionieren des Schneidplattenträgers auf der Auflagefläche und zum zusätzlichen Abstützen gegen Bearbeitungsdruck in der einjustierten Position dienenden, in mindestens einer an einer Seitenwand ausmündenden Bohrung verschiebbaren gelagerten Druckstück, das mittels eines Stellglieds gegen eine der Seitenwand gegenüberliegende Stützwand des Werkzeugkörpers drückbar ist, bekannt.

Der Erfindung liegt die Aufgabe zugrunde, eine Werkzeugmaschine der eingangs genannten Art bereitzustellen, welche umfangreiche Bearbeitungsmöglichkeiten für Werkstücke bei optimierter Bearbeitungsqualität mit minimiertem Zeitaufwand ermöglicht.

Diese Aufgabe wird mit einer Werkzeugmaschine nach Anspruch 1 gelöst.

An der Werkzeugmaschine lässt sich durch eine relative Bewegung und insbesondere relative Verschiebung zwischen der mindestens einen Werkzeugspindel und dem Werkstückträger eine Hubbewegung zwischen einem Werkstück und einem Werkzeug zur Bearbeitung des Werkstücks durchführen. Insbesondere lässt sich eine oszillierende Hubbewegung durchführen. Diese relative Hubbewegung zwischen dem Werkstück und dem Werkzeug kann dabei durch alleinige Werkzeugverschiebung, alleinige Werkstückverschiebung oder durch eine Kombination von Werkstückverschiebung und Werkzeugverschiebung erreicht werden.

Über die Motoreinrichtung lässt sich die Beaufschlagungseinrichtung bewegen. Dadurch wiederum lässt sich die mindestens eine verschiebliche Stange an einem Werkzeug bewegen. Über die mindestens eine verschiebliche Stange kann insbesondere eine Querbewegung (zu einer Hubbewegung) eines auf ein Werkstück direkt einwirkenden Werkzeugelements erreicht werden.

Dadurch ist es beispielsweise möglich, ein Honwerkzeug zu verwenden, wobei durch die entsprechende Positionierung der mindestens einen beweglichen Stange des Werkzeugs eine Anpresskraft an ein Werkstück einstellbar ist.

Ferner ist es beispielsweise dadurch möglich, eine Vorbearbeitung an einem Werkstück vor dem Honen durchzuführen, wobei beispielsweise durch eine entsprechende Querverstellung über die mindestens eine Stange ein Schneidenverschleiß kompensierbar ist bzw. nachfolgend einer Messung beispielsweise eines Bohrungsdurchmessers ein Vorbearbeitungswerkzeug wie ein Feinbohrwerkzeug über die Querverstellung definiert eingestellt werden kann, um eine hohe Bearbeitungsqualität zu erzielen.

Es ist möglich, an dem Werkzeug unterschiedliche Arten von Querverstellungen vorzusehen. Beispielsweise kann eine Querverstellung von zwei getrennten Schneideneinrichtungen vorgesehen werden, wenn die Beaufschlagungseinrichtung einer Werkzeugspindel und das Werkzeug als Gegenstück entsprechend ausgebildet ist. Beispielsweise kann ein Werkzeug zwei koaxial zueinander geführte Stangen umfassen, um zwei Schneideneinrichtungen verstellen zu können. Es ist beispielsweise auch möglich, dass ein Werkzeug eine Stange umfasst, um eine Schneideneinrichtung verstellen zu können. Das Werkzeug kann beispielsweise eine zweite Schneideneinrichtung umfassen, welche über einen Fluidaktor verstellbar ist.

An der erfindungsgemäßen Werkzeugmaschine ist es möglich, ein Werkstück in der gleichen Aufspannung einem ersten Bearbeitungsvorgang wie einem Feinbohrvorgang und einem nachfolgenden zweiten Bearbeitungsvorgang und insbesondere einem Honvorgang zu unterziehen. Es lässt sich dadurch unter minimiertem Zeitaufwand eine hohe Bearbeitungsqualität erzielen. Durch die erfindungsgemäße Werkzeugmaschine lässt sich ohne Änderung der Aufspannung ein Werkstück auf unterschiedliche Weise bearbeiten und insbesondere lassen sich unterschiedliche Bearbeitungsvorgänge kombinieren. Beispielsweise kann eine Vorbearbeitung durch Bohren, Reiben oder Schälen mit nachfolgender Bearbeitung durch Honen erfolgen.

Insbesondere umfasst die Motoreinrichtung einen Elektromotor wie beispielsweise einen Torque-Motor. Durch diesen kann die Beaufschlagungseinrichtung angetrieben werden und dadurch wiederum kann eine Bewegung und Positionierung der mindestens einen Stange des Werkzeugs erfolgen.

Bei einer konstruktiv einfachen Ausführungsform weist die Beaufschlagungseinrichtung mindestens eine linear bewegliche Stange auf, an welche die mindestens eine Stange des Werkzeugs koppelbar ist. Die mindestens eine Stange des Werkzeugs lässt sich dann auf einfache Weise an die Beaufschlagungseinrichtung der entsprechenden Werkzeugspindel koppeln. Über die Positionierung der mindestens einen Stange der Werkzeugspindel lässt sich auf einfache Weise die mindestens eine Stange des Werkzeugs positionieren.

Insbesondere ist die mindestens eine Stange des Werkzeugs eine Druckstange oder Druck-Zug-Stange, mittels welcher mindestens ein Werkzeugelement verstellbar ist. Über das Werkzeugelement wirkt das Werkzeug auf ein Werkstück. Das Werkzeugelement ist beispielsweise eine Schneide oder Schneideneinrichtung. Bei der Ausbildung der mindestens einen Stange des Werkzeugs als Druckstange lässt sich diese durch Einwirkung der Beaufschlagungseinrichtung der Werkzeugspindel verschieben, wenn diese einen Druck ausübt. Beispielsweise durch eine Federeinrichtung wird die mindestens eine Stange des Werkzeugs zurückgestellt, wenn die Beaufschlagungseinrichtung keinen Druck ausübt. Bei der Ausbildung als Druck-Zug-Stange bestimmt die Beaufschlagungseinrichtung die Position der mindestens einen Stange des Werkzeugs sowohl beim Vorschub als auch beim Rückschub.

Das mindestens eine Werkzeugelement ist eine Schneide oder Schneideneinrichtung oder umfasst eine solche. Beispielsweise ist das entsprechende Werkzeug ein Feinbohrwerkzeug mit entsprechenden Schneiden. Das Werkzeug kann auch ein Honwerkzeug mit einer Schneideneinrichtung sein, welche vielschneidig ist und insbesondere Honsteine umfasst.

Ganz besonders vorteilhaft ist es, wenn der Satz von Werkzeugen mindestens ein Vorbearbeitungswerkzeug (als erstes Werkzeug) und ein Honwerkzeug (als zweites Werkzeug) umfasst. Dadurch ergeben sich umfangreiche Bearbeitungsmöglichkeiten. Durch die mindestens eine Stange des Werkzeugs lassen sich beispielsweise eine oder mehrere Honleisten des Honwerkzeugs ansteuern. Dadurch lässt sich insbesondere die Anpresskraft des Werkzeugs an ein Werkstück einstellen. Es ist möglich, in einer Aufspannung eines Werkstücks zuerst einen Vorbearbeitungsvorgang und anschließend eine Honbearbeitung durchzuführen. Über das Honwerkzeug kann ein Bohrungsdurchmesser ermittelt werden, insbesondere über eine Staudruckmessung. Dieses Ergebnis kann dann verwendet werden, um über die mindestens eine Stange das Vorbearbeitungswerkzeug für ein nächstes Werkstück nachzustellen.

Insbesondere umfasst der Satz von Werkzeugen mindestens ein Feinbohrwerkzeug. Dadurch lässt sich beispielsweise eine Feinbohrbearbeitung einer Bohrung wie einer Zylinderbohrung durchführen. Anschließend kann mit einem Honwerkzeug eine Honbearbeitung der Bohrung durchgeführt werden. Durch eine erfindungsgemäße Werkzeugmaschine lässt sich eine Vielzahl von Bearbeitungsvorgängen bzw. Kombination von Bearbeitungsvorgängen insbesondere in der gleichen Aufspannung des Werkstücks durchführen. Beispielsweise lassen sich Bohrungen an einer Kurbelwelle, einem Passlager, für einen Ventilsitz und Ventilführung oder für einen Zylinder herstellen und mit dem ersten Werkzeug wird eine Feinbohrbearbeitung durchgeführt. Eine nachfolgende Bearbeitung des Werkstücks kann ohne Änderung der Aufspannung erfolgen. Beispielsweise erfolgt ein Reiben, Schälen, Honen usw.

Günstig ist es, wenn die Werkzeuge jeweils mindestens eine Schneide oder Schneideneinrichtung aufweisen, welche an die mindestens eine Stange des Werkzeugs gekoppelt ist, wobei die mindestens eine Schneide oder Schneideneinrichtung über die mindestens eine Stange in einer Richtung quer zu einer Rotationsachse des Werkzeugs verstellbar ist. Dadurch lässt sich ein Werkzeugelement des Werkzeugs einem Werkstück zustellen. Abhängig von der Art des Werkzeugs kann dadurch der Bearbeitungsvorgang optimiert werden. Beispielsweise lässt sich bei einem Feinbohrwerkzeug eine Schneidennachstellung zur Kompensation eines Schneidenverschleißes durchführen oder es lässt sich eine Nachstellung zur optimierten Dimensionierung einer Bohrung erreichen. Bei einem Honwerkzeug lässt sich die Anpresskraft einstellen.

Insbesondere ist die mindestens eine Werkzeugspindel bezogen auf eine Schwerkraftrichtung horizontal orientiert. Dadurch lässt sich beispielsweise die Späneabfuhr optimieren. Wenn das Werkzeug starr an der mindestens einen Werkzeugspindel gehalten ist, lässt sich eine Horizontalbearbeitung durchführen. Insbesondere lässt sich eine horizontale Honbearbeitung durchführen.

Vorteilhafterweise ist eine Werkzeugwechseleinrichtung vorgesehen, welche Teil der Werkzeugmaschine ist. Dadurch lässt sich auf zeitoptimierte Weise beispielsweise nach einem Vorbearbeitungsvorgang ein zweites Werkzeug wie ein Honwerkzeug an der mindestens einen Werkzeugspindel einwechseln.

Günstig ist es, wenn eine Reinigungseinrichtung zur Reinigung eines Werkstücks nach einer Bearbeitung mit einem ersten Werkzeug vor der Bearbeitung mit einem zweiten Werkzeug vorgesehen ist. Dadurch lässt es sich beispielsweise verhindern, dass Späne, welche aus einem Vorbearbeitungsvorgang resultieren, am Werkstück verbleiben und bei einem Honvorgang zu einer unkontrollierten Riefenbildung führen.

Bei einer Ausführungsform ist eine Fluidstrahleinrichtung und/oder Lasereinrichtung vorgesehen. Die Fluidstrahleinrichtung kann dabei Teil einer Reinigungseinrichtung sein, um ein Werkstück mittels einem oder mehreren Fluidstrahlen zu reinigen. Es kann beispielsweise auch eine Fluidstrahlhonbearbeitung vorgesehen sein. Über die Lasereinrichtung lässt sich ein Werkstück getrennt von den Werkzeugen an den Werkzeugspindeln bearbeiten. Beispielsweise ist ein Laserstrukturiervorgang durchführbar.

Es ist dann vorteilhaft, wenn die Reinigungseinrichtung und/oder die Fluidstrahleinrichtung und/oder die Lasereinrichtung an einer Vorderseite der Werkzeugmaschine angeordnet ist und durch den Werkstückträger anfahrbar ist. Dadurch liegt die entsprechende Einrichtung am Rand eines Arbeitsraums und nicht im Bewegungsraum der mindestens einen Werkzeugspindel.

Bei einer vorteilhaften Ausführungsform ist eine Standardschnittstelle an der mindestens einen Werkzeugspindel für ein Werkzeug vorgesehen. Diese Standardschnittstelle ist insbesondere eine Hohlschaftkegel-Schnittstelle.

Es ist auch günstig, wenn die mindestens eine Werkzeugspindel eine Druckluft-Schnittstelle für ein Werkzeug aufweist. Dadurch kann einem Werkzeug über die Werkzeugmaschine Druckluft bereitgestellt werden. Diese Druckluft kann beispielsweise zum Anblasen verwendet werden oder auch zu Druckmessungen und insbesondere Staudruckmessungen.

Entsprechend ist es vorgesehen, dass ein Werkzeug eine Schnittstelle zur Einkopplung von Druckluft aufweist. Dadurch kann ein Werkzeug ein Werkstück pneumatisch beaufschlagen, um beispielsweise eine pneumatische Druckmessung durchzuführen oder das Werkstück zu reinigen.

Es ist dann günstig, wenn ein Werkzeug mindestens eine Austrittsöffnung für Druckluft aufweist. Dadurch kann Druckluft ausgeblasen werden, um beispielsweise ein Werkstück anzublasen. Durch Messung des Staudrucks kann dann der Durchmesser dieser Bohrung ermittelt werden.

Insbesondere ist eine Steuerungseinrichtung vorgesehen, durch welche über die Beaufschlagungseinrichtung eine Position der mindestens einen Stange des Werkzeugs einstellbar ist. Die Steuerungseinrichtung ist beispielsweise Teil der übergeordneten Steuerungseinrichtung der Werkzeugmaschine. Durch entsprechende Ansteuerung der Motoreinrichtung lässt sich die Beaufschlagungseinrichtung ansteuern, welche wiederum die Position der Stange ansteuert.

Auf diese Weise lässt sich beispielsweise die Anpresskraft eines Werkzeugs einstellen.

Bei einer Ausführungsform ist mindestens ein Werkzeug vorgesehen, welches mindestens ein erstes Werkzeugelement und ein zweites Werkzeugelement aufweist, welche durch die Beaufschlagungseinrichtung unabhängig voneinander verstellbar sind und insbesondere unabhängig voneinander zustellbar sind. Dadurch ergeben sich umfangreiche Bearbeitungsmöglichkeiten an einem Werkstück. Dadurch lassen sich beispielsweise mit einem Werkzeug zwei unterschiedliche Bearbeitungsvorgänge an einem Werkstück durchführen. Ein Beispiel für ein entsprechendes Werkzeug ist ein Honwerkzeug, welches unterschiedliche Sätze von Honleisten aufweist.

Der Erfindung liegt ferner die Aufgabe zugrunde, ein Verfahren der eingangs genannten Art bereitzustellen, mit welchem sich eine optimierte Werkstückbearbeitung ergibt.

Diese Aufgabe wird mit einem Verfahren nach Anspruch 10 gelöst.

Das erfindungsgemäße Verfahren weist die bereits im Zusammenhang mit der erfindungsgemäßen Werkzeugmaschine erläuterten Vorteile auf.

Dadurch, dass das Werkstück bei der Bearbeitung mit dem ersten Werkzeug und bei der Bearbeitung mit dem zweiten Werkzeug in der gleichen Aufspannung gehalten ist, d. h. nicht umgespannt werden muss, ergibt sich eine optimierte Bearbeitungsqualität mit minimierter Bearbeitungszeit.

Über die in die Werkzeugspindel integrierte Motoreinrichtung lässt sich die Werkstückbearbeitung gezielt steuern. Beispielsweise lässt sich eine Anpresskraft auf das Werkstück einstellen. Es ergeben sich auch umfangreiche Nachstellungsmöglichkeiten für ein Werkzeug.

Insbesondere erfolgt die Verschiebung der mindestens einen Stange gesteuert, so dass eine definierte Verstellung ermöglicht ist.

Beispielsweise wird über die Verschiebung der mindestens einen Stange eine Anpresskraft des Werkzeugs an ein Werkstück eingestellt oder es wird ein Werkzeugverschleiß kompensiert.

Bei einer vorteilhaften Ausführungsform ist das erste Werkzeug ein Feinbohrwerkzeug. Dadurch lässt sich beispielsweise eine Feinbohrbearbeitung einer Bohrung wie einer Zylinderbohrung erreichen.

Bei einer besonders vorteilhaften Ausführungsform ist das zweite Werkzeug ein Honwerkzeug. Es lässt sich dann eine Honbearbeitung an einem Werkstück durchführen, ohne dass das Werkstück zwischen einer Vorbearbeitung wie Feinbohrbearbeitung oder Honbearbeitung umgespannt werden muss.

Ganz besonders vorteilhaft ist es, wenn das Werkstück nach der Bearbeitung mit dem ersten Werkzeug und vor Bearbeitung mit dem zweiten Werkzeug gereinigt wird. Dadurch lässt sich verhindern, dass beispielsweise Späne, welche bei der Bearbeitung mit dem ersten Werkzeug entstanden sind, an dem Werkstück verbleiben. Wenn beispielsweise eine Honbearbeitung durchgeführt werden soll, dann können solche Späne zu einer undefinierten Riefenbildung führen. Die Reinigung des Werkstücks kann in der Zeit erfolgen, in derein Werkzeugwechsel zwischen dem ersten Werkzeug und dem zweiten Werkzeug durchgeführt wird.

Es ist günstig, wenn das erste Werkzeug und das zweite Werkzeug zeitlich nacheinander von der gleichen Werkzeugspindel gehalten werden. Das zweite Werkzeug wird nach Fertigstellung der Werkstückbearbeitung mit dem ersten Werkzeug an der entsprechenden Werkzeugspindel eingewechselt. Dadurch lässt sich eine optimierte Werkstückbearbeitung durchführen. Es ist dabei grundsätzlich auch möglich, dass, wenn beispielsweise die Werkzeugmaschine eine erste Werkzeugspindel und eine zweite Werkzeugspindel aufweist (Doppelspindler), diese unterschiedliche Werkzeuge halten und in einem Vorgang ohne Werkzeugwechsel zuerst eine Werkstückbearbeitung mit dem ersten Werkzeug und dann mit dem zweiten Werkzeug durchgeführt wird.

Bei einer Ausführungsform erfolgt die Bearbeitung mindestens teilweise mittels eines wassermischbaren Kühlschmierstoffs oder mit Honöl.

Ganz besonders vorteilhaft ist es, wenn an einem Werkstück eine Durchmessermessung einer Bohrung mittels einer Staudruckmessung durchgeführt wird. Die Ergebnisse können dann dazu verwendet werden, für beispielsweise einen Feinbohrvorgang an einem nächsten Werkstück das Feinbohrwerkzeug über die entsprechende mindestens eine Stange so einzustellen, dass die Vorgaben erfüllt sind.

Die nachfolgende Beschreibung bevorzugter Ausführungsformen dient im Zusammenhang mit den Zeichnungen der näheren Erläuterung der Erfindung. Es zeigen:
- Figur 1: eine schematische Teildarstellung eines Ausführungsbeispiels einer erfindungsgemäßen Werkzeugmaschine;

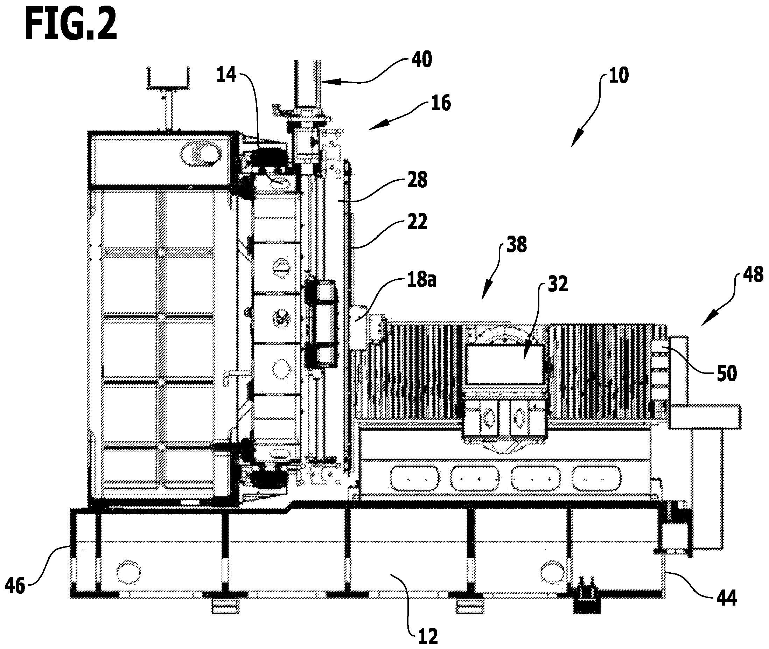

- Figur 2: eine Seitenansicht der Werkzeugmaschine gemäß Figur 1 ohne Verkleidung;
- Figur 3: eine schematische Darstellung eines Ausführungsbeispiels einer Werkzeugspindel;
- Figur 4: eine schematische Darstellung eines Ausführungsbeispiels eines Honwerkzeugs;
- Figur 5: eine schematische Schnittdarstellung eines Ausführungsbeispiels eines Feinbohrwerkzeugs; und
- Figur 6: eine schematische Schnittdarstellung eines weiteren Ausführungsbeispiels eines Werkzeugs.

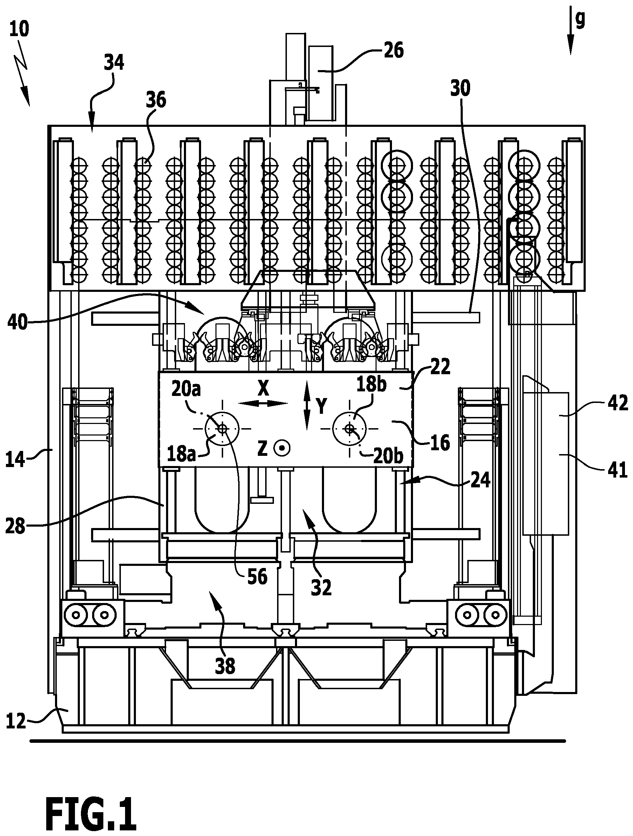

Bei dem gezeigten Ausführungsbeispiel umfasst die Werkzeugträgereinrichtung 16 eine erste Werkzeugspindel 18a und eine zweite Werkzeugspindel 18b. Ein an den jeweiligen Werkzeugspindeln 18a, 18b gehaltenes Werkzeug ist um eine Rotationsachse 20a, 20b rotierbar. Bei der Darstellung gemäß Figur 1 liegen die Rotationsachsen 20a, 20b parallel zueinander. Sie sind parallel zu einer Z-Richtung orientiert, welche bei der Darstellung gemäß Figur 1 senkrecht zur Zeichenebene liegt. Die Z-Richtung ist bezogen auf die Schwerkraftrichtung g insbesondere eine horizontale Richtung.

Die Werkzeugträgereinrichtung 16 istals Schlitten 22 ausgebildet, welcher an einer Schlittenführung 24 gehalten ist und über die Schlittenführung 24 in einer Y-Richtung (Richtung und Gegenrichtung) linear beweglich ist. Die Y-Richtung liegt quer und insbesondere senkrecht zur Z-Richtung. Bezogen auf die Schwerkraftrichtung g ist die Y-Richtung insbesondere eine vertikale Richtung.

Zum Antrieb der Bewegung des Schlittens 22 in der Y-Richtung und zu dessen Positionierung ist dem Schlitten 22 eine Antriebseinrichtung 26 zugeordnet. Diese kann beispielsweise einen Kugelgewindetrieb oder einen Linearmotor umfassen.

Der Schlitten 22 ist selber an einem Schlitten 28 gehalten, welcher in einer X-Richtung (Richtung und Gegenrichtung) an einer Schlittenführung 30 linear verschieblich ist. Zur Verschiebung und Positionierung ist ein entsprechender Antrieb vorgesehen. Die X-Richtung ist quer und insbesondere senkrecht zu der Y-Richtung und der Z-Richtung. Die X-Richtung ist bezogen auf die Schwerkraftrichtung g insbesondere eine horizontale Richtung.

An dem Maschinenbett 12 ist (mindestens) ein Werkstückträger 32 angeordnet. Die erste Werkzeugspindel 18a und die zweite Werkzeugspindel 18b und damit daran gehaltene Werkzeuge und der Werkstückträger 32 sind in der Z-Richtung (Richtung und Gegenrichtung) relativ zueinander beweglich. Ein an dem Werkstückträger 32 gehaltenes Werkstück und die Werkzeugspindel 18a bzw. 18b sind dadurch relativ zueinander in der X-Richtung als erste Richtung, der Y-Richtung als zweite Richtung und der Z-Richtung als dritte Richtung verschieblich.

Bei einem Ausführungsbeispiel sind die Werkzeugspindeln 18a, 18b in der Z-Richtung zur Bearbeitung eines Werkstücks nicht beweglich und der Werkstückträger 32 ist in der Z-Richtung verschieblich an dem Maschinenbett gehalten. Dem Werkstückträger 32 ist dazu ein Antrieb zugeordnet.

Bei einem alternativen Ausführungsbeispiel sind die erste Werkzeugspindel 18a und die zweite Werkzeugspindel 18b verschieblich an der Werkzeugträgereinrichtung 16 gehalten, um eine Z-Verschieblichkeit zu ermöglichen.

Es ist auch möglich, eine Z-Verschieblichkeit der Werkzeugspindeln 18a, 18b an der Werkzeugträgereinrichtung 16 und eine Z-Verschieblichkeit des Werkstückträgers 32 an dem Maschinenbett zu kombinieren.

Es kann beispielsweise auch vorgesehen sein, dass der Werkstückträger 32 um eine beispielsweise vertikale Achse drehbar ist.

Bei dem gezeigten Ausführungsbeispiel weist das Bearbeitungszentrum 10 eine Lagereinrichtung 34 für Werkzeuge 36 auf, welche oberhalb eines Arbeitsraums 38, in welchem Werkstücke bearbeitet werden, angeordnet ist.

Ferner ist eine Werkzeugwechseleinrichtung 40 vorgesehen, über welche Werkzeuge 36 an die Werkzeugspindeln 18a und 18b einsetzbar sind und von dieser entnehmbar sind.

Ein entsprechendes Bearbeitungszentrum ist beispielsweise in der WO 2009/033920 A1 beschrieben. Auf diese Druckschrift wird Bezug genommen und diese Druckschrift wird zum Teil der Offenbarung gemacht.

Das Bearbeitungszentrum 10 kann auch nureine einzige Werkzeugspindel umfassen oder mehr als zwei Werkzeugspindeln umfassen.

Das Bearbeitungszentrum 10 weist eine Steuerungseinrichtung 41 auf, welche mindestens teilweise in einem Schaltkasten 42 angeordnet ist. Über die Steuerungseinrichtung 41 lassen sich Abläufe der Werkstückbearbeitung steuern.

Das Bearbeitungszentrum 10 hat eine Vorderseite 44 und eine Rückseite 46. Der Arbeitsraum 38 weist zu der Vorderseite 44 zu.

Bei einem Ausführungsbeispiel sind an der Vorderseite 44 eine oder mehrere Zusatzeinrichtungen 48 angeordnet. Über eine Zusatzeinrichtung 48 kann auf ein Werkstück zusätzlich zu Werkzeugen an Werkzeugspindeln 18 eingewirkt werden.

Bei einem Ausführungsbeispiel ist als Zusatzeinrichtung 48 eine Reinigungseinrichtung 50 vorgesehen. Ein Werkstück ist über den Werkstückträger 32 zu der Reinigungseinrichtung 50 verfahrbar. Dort kann das Werkstück beispielsweise nach einem ersten Bearbeitungsvorgang vor einem zweiten Bearbeitungsvorgang gereinigt werden. Dadurch lässt sich die Bearbeitungsqualität verbessern. Die Reinigung erfolgt beispielsweise durch Anblasen oder durch direkte Einwirkung einer Reinigungseinrichtung.

Die Zusatzeinrichtung 48 kann beispielsweise auch durch eine Fluidstrahleinrichtung gebildet sein oder eine solche umfassen. Durch die Fluidstrahleinrichtung lässt sich ein Werkstück mit dem Fluidstrahl beaufschlagen. Der Fluidstrahl kann ein Gasstrahl und/oder Flüssigkeitsstrahl sein. Bei entsprechender Ausbildung lässt sich dadurch beispielsweise ein Fluidstrahl-Honvorgang durchführen.

Es kann beispielsweise alternativ oder zusätzlich vorgesehen sein, dass die Zusatzeinrichtung 48 durch eine Lasereinrichtung gebildet ist oder eine solche umfasst. Dadurch ist es beispielsweise möglich, eine Laserstrukturierbearbeitung eines Werkstücks durchzuführen.

Die Zusatzeinrichtung 48 oder die Zusatzeinrichtungen 48 sind an einem Rand des Arbeitsraums 38 z. B. an der Vorderseite 44 angeordnet, so dass eine Zusatzeinrichtung 48 die relative Beweglichkeit zwischen dem Werkstückträger 32 und den Werkzeugspindeln 18a, 18b nicht behindert.

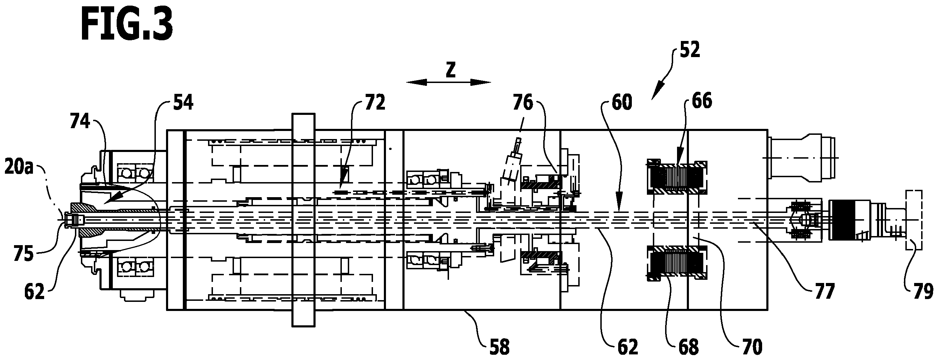

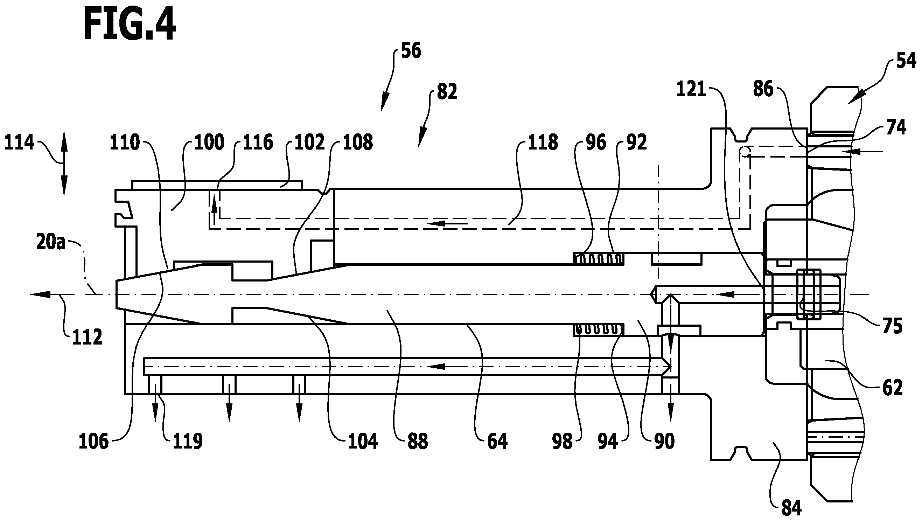

Ein Ausführungsbeispiel einer Werkzeugspindel, welches in Figur 3 schematisch gezeigt und dort mit 52 bezeichnet ist, umfasst eine Schnittstelle 54 an ein Werkzeug. Die Schnittstelle 54 ist beispielsweise als Hohlschaftkegel (HSK)-Schnittstelle ausgebildet. An der Schnittstelle 54 ist ein Werkzeug (in Figur 4 mit dem Bezugszeichen 56 angedeutet) in die Werkzeugspindel 52 einsetzbar und mit dieser lösbar fixierbar. Die Fixierung ist dabei drehfest, so dass bei der Rotation eines entsprechenden rotierbaren Teils der Werkzeugspindel 52 um beispielsweise die Rotationsachse 18a das Werkzeug 56 mitrotiert wird.

Die Werkzeugspindel 52 umfasst ein Gehäuse 58. In dem Gehäuse 58 ist eine Beaufschlagungseinrichtung 60 linear verschieblich gelagert. Die Beaufschlagungseinrichtung 60 umfasst insbesondere eine linear verschiebliche Stange 62. Ein Werkzeug 56 weist, wie untenstehend noch näher erläutert wird, eine Stange 64 auf. Bei Fixierung des Werkzeugs 56 an der Werkzeugspindel 52 an der Schnittstelle 54 werden auch die Stangen 62 und 64 miteinander gekoppelt. Über gesteuerte Bewegung der Stange 62 der Werkzeugspindel 52 lässt sich dann auch die Stange 64 des Werkzeugs 56 bewegen.

Die Werkzeugspindel 52 umfasst eine Motoreinrichtung 66, welche in dem Gehäuse 58 der Werkzeugspindel 52 angeordnet ist. Die Motoreinrichtung 66 ist in die Werkzeugspindel 52 integriert. Die Motoreinrichtung 66 umfasst beispielsweise einen Elektromotor 68.

Durch entsprechende Ansteuerung der Motoreinrichtung 66 lässt sich ein definierter Vorschub der Stange 62 der Werkzeugspindel 52 und damit auch der Stange 64 des Werkzeugs 56 erreichen.

Die Steuerung der Bewegung der Stange 62 über entsprechende Ansteuerung der Motoreinrichtung 66 erfolgt durch einen entsprechenden Teil der Steuerungseinrichtung 41. Über den Elektromotor 68 erfolgt eine elektromechanische, angetriebene Bewegung der Stange 62 und damit der Stange 64.

Die Werkzeugspindel 52 umfasst eine als Ganzes mit 72 bezeichnete Antriebseinrichtung, über welche sich die Schnittstelle 54 an das Werkzeug 56 um beispielsweise die Rotationsachse 20a rotieren lässt bzw. drehen lässt.

Die Werkzeugspindel 52 weist eine Druckluft-Schnittstelle 74 für das Werkzeug 56 auf. Die Werkzeugspindel 52 umfasst eine Luftzuführungseinrichtung 76. Diese Luftzuführungseinrichtung 76 steht in fluidwirksamer Verbindung mit der Druckluft-Schnittstelle 74. Das entsprechende Werkzeug 56 weist eine Gegenschnittstelle zu der Druckluft-Schnittstelle 74 auf. Es lässt sich dann Druckluft von der Werkzeugspindel 52 in das Werkzeug 56 einkoppeln. Diese Druckluft kann als Blasluft verwendet werden oder, wie untenstehend noch näher erläutert wird, als Messluft bei einer Staudruckmessung.

Die Werkzeugspindel 52 weist weiterhin eine Schnittstelle 75 für Kühlschmierstoff auf, mit welchem das Werkzeug 56 versorgbar ist. Beispielsweise ist in der Stange 62 ein Kanal 77 für Kühlschmierstoff gebildet, welcher in fluidwirksamer Verbindung mit der Schnittstelle 75 und einer Versorgungseinrichtung 79 für Kühlschmierstoff der Werkzeugmaschine steht.

Bei einer Ausführungsform erfolgt die Bearbeitung mindestens teilweise mit wassermischbarem Kühlschmierstoff (Emulsion) oder mit Öl wie Honöl.

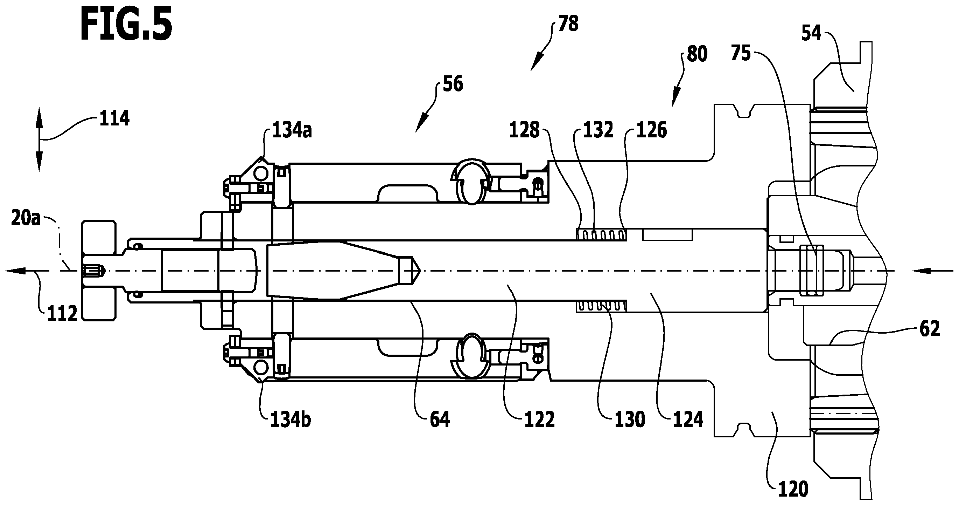

Zu dem Bearbeitungszentrum 10 gehört ein Satz von Werkzeugen, welcher mindestens ein erstes Werkzeug und insbesondere ein Vorbearbeitungswerkzeug 78 wie ein Feinbohrwerkzeug 80 (Figur 5) und mindestens ein zweites Werkzeug und insbesondere ein Honwerkzeug 82 (Figur 4) umfasst. Ein an einem Werkstückträger 32 fixiertes Werkstück lässt sich in der gleichen Aufspannung nacheinander beispielsweise zuerst von dem Feinbohrwerkzeug 80 bearbeiten und anschließend (nach eventueller Reinigung an der Reinigungseinrichtung 50) durch das Honwerkzeug 82 weiterbearbeiten.

Ein Ausführungsbeispiel eines Honwerkzeugs 82 (Figur 4) umfasst eine Schnittstelle 84 für die Schnittstelle 54. Ferner ist eine Druckluft-Schnittstelle 86 zum Anschluss an die Druckluft-Schnittstelle 74 vorgesehen.

Das Honwerkzeug 82 weist eine Stange 88 auf, welche insbesondere eine Druckstange ist. Die Stange 88 ist an die Stange 62 der Werkzeugspindel 52, wenn das Honwerkzeug 82 an der Werkzeugspindel 52 fixiert ist, ankoppelbar.

Die Stange 88 weist einen Bereich 90 auf, welcher in einem Aufnahmeraum 92 positioniert ist. Der Bereich 90 hat eine Ringfläche 94, welche einem Ende 96 des Bereichs 90 zugewandt ist. Zwischen der Ringfläche 94 und dem Ende 96 sitzt eine Federeinrichtung 98, welche eine Federkraft ausübt, die bestrebt ist, den Bereich 90 und damit die Stange 88 von dem Ende 96 wegzudrücken. Die Kraft der Motoreinrichtung 66, welche für einen Vorschub der Stange 62 und damit der Stange 88 sorgt, wirkt dieser Federkraft entgegen.

Das Honwerkzeug 82 weist (mindestens) eine Honleiste 100 auf, an welcher eine Schneideneinrichtung 102 sitzt. Die Schneideneinrichtung 102, über welche das Honwerkzeug 82 auf ein Werkstück wirkt, bildet ein entsprechendes Honelement und ist vielschneidig ausgebildet. Insbesondere umfasst die Schneideneinrichtung 102 gebundenes Korn. Bei einer Honbearbeitung liegt aufgrund der Schneideneinrichtung 102 eine ständige Flächenberührung zwischen dem Honwerkzeug 82 und dem Werkstück vor. Bei der Honbearbeitung findet zwischen dem Honwerkzeug 82 und dem Werkstück ein oszillierender Richtungswechsel der Längsbewegung statt. Diese Längsbewegung wird dabei durch die relative Bewegung zwischen dem Werkstückträger 32 und der Werkzeugspindel 52 erreicht. Die beim Honvorgang erzielten Werkstückoberflächen weisen parallele, sich kreuzende Riefen auf.

Die Honleiste 100 ist an die Stange 88 gekoppelt. Beispielsweise weist dazu die Stange 88 einen ersten konischen Bereich 104 und einen zweiten konischen Bereich 106 auf. Die Honleiste 100 ist an dem ersten konischen Bereich 104 mit einem ersten gegenkonischen Bereich 108 und an dem zweiten konischen Bereich 106 mit einem zweiten gegenkonischen Bereich 110 abgestützt. Ein Vorschub der Stange 88 in einer Richtung 112 parallel zur Rotationsachse 18a bewirkt eine Verschiebung der Honleiste 100 in einer Richtung 114 quer und insbesondere senkrecht zu der Richtung 112. Eine entsprechende Position der Honleiste 100 bezogen auf die Richtung 114 ist durch die Position der Stange 88 in der Richtung 112 bestimmt. Diese Position wird über die Motoreinrichtung 66 in Kombination mit der Federeinrichtung 98 festgehalten. Diese Position wiederum ist einstellbar.

Über die Veränderung der Position der Stange 88 (bewirkt durch Änderung der Position der Stange 62) lässt sich die Schneideneinrichtung 102 einem Werkstück zustellen. Es lässt sich dadurch ein Anpressdruck des Honwerkzeugs 82 an ein Werkstück definiert gesteuert einstellen.

Durch das Honwerkzeug 82 lassen sich beispielsweise Bohrungen honbearbeiten.

Das Honwerkzeug 82 weist eine oder mehrere Öffnungen 116 für Druckluft auf, welche mit der Druckluft-Schnittstelle 86 in fluidwirksamer Verbindung stehen. Dadurch lässt sich beispielsweise in eine Bohrung Druckluft einblasen. Diese Öffnung oder Öffnungen stehen über einen oder mehrere Kanäle 118 in fluidwirksamer Verbindung mit der Druckluft-Schnittstellt 86.

Durch pneumatische Staudruckmessung kann über Druckluft beispielsweise der Durchmesser einer Bohrung an dem Honwerkzeug 82 gemessen werden. Dadurch ist ein Nachmessen beispielsweise nach einer Feinbohroperation (siehe unten) durch eine separate Messeinrichtung wie einen Messdorn nicht notwendig. Das ohnehin vorgesehene Honwerkzeug ist dann auch das Messwerkzeug zur Durchmesserbestimmung.

Das Honwerkzeug 82 weist eine oder mehrere Öffnungen 119 auf, welche in fluidwirksamer Verbindung mit einer Kühlschmierstoff-Schnittstelle 121 des Honwerkzeugs 82 stehen. Die Kühlschmierstoff-Schnittstelle 121 ist an die Kühlschmierstoff-Schnittstelle 75 der Werkzeugspindel 52 anschließbar. Dadurch lässt sich das Honwerkzeug 82 bei einem Bearbeitungsvorgang mit Kühlschmierstoff versorgen.

Ein Ausführungsbeispiel eines Vorbearbeitungswerkzeugs ist ein Feinbohrwerkzeug (Figur 5). Dieses Feinbohrwerkzeug 80 ist umfasst eine Schnittstelle 120 zur Ankopplung an die Werkzeugspindel 52.

Das Feinbohrwerkzeug 80 umfassteine Stange 122, welche an die Stange 62 der Werkzeugspindel 52 ankoppelbar ist.

Die Stange 122 weist ähnlich wie die oben beschriebene Stange 88 einen verbreiterten Bereich 124 mit einer Ringfläche 126 auf. Zwischen der Ringfläche 126 und einem Ende 128 eines entsprechenden Aufnahmeraums 130 für den Bereich 124 sitzt eine Federeinrichtung 132. Diese stützt sich an der Ringfläche 126 des Bereichs 124 und dem Ende 128 ab. Die Federeinrichtung 132 übt eine Federkraft aus, welche bestrebt ist, die Stange 122 in Richtung der Werkzeugspindel 52 zu schieben. Die Motoreinrichtung 66 muss dieser Federkraft entgegenwirken.

Das Feinbohrwerkzeug 80 umfasst Schneiden 134a, 134b. Die Schneiden 134a, 134b sind an die Stange 122 gekoppelt. Über Vorschub der Stange 122 in einer Richtung 112 parallel zu einer Rotationsachse 18a des Feinbohrwerkzeugs 80 lassen sich die Schneiden 134a, 134b in der Richtung 114 senkrecht zur Richtung 112 verstellen und insbesondere einem Werkstück zustellen. Durch eine solche Zustellung lässt sich beispielsweise ein Schneidenverschleiß kompensieren oder es lässt sich ein Bohrungsdurchmesser festlegen.

Vorgegeben durch die Position der Stange 122, welche wiederum gesteuert durch die Position der Stange 62 eingestellt wird, befinden sich die Schneiden 134a, 134b in einer bestimmten Position in der Richtung 114, wobei diese Position in der Richtung 114 gesteuert definiert einstellbar ist.

Die erfindungsgemäße Werkzeugmaschine und das erfindungsgemäße Verfahren funktionieren wie folgt:
Ein oder mehrere Werkstücke werden in dem Bearbeitungszentrum 10 bearbeitet.

Beispielsweise erfolgt eine Vorbearbeitung wie ein Feinbohren an einer Zylinderbohrung. Bei an dem Werkstückträger 32 aufgespanntem Werkstück bzw. aufgespannten Werkstücken wird an einer Werkzeugspindel 18a bzw. 18b das Feinbohrwerkzeug 80 eingesetzt.

Durch relative Bewegung (Hubbewegung) des Werkstückträgers 32 und der Werkzeugspindeln 18a, 18b erfolgt die Bearbeitung wie beispielsweise Eintauchen der Schneiden 134a, 134b in eine zuvor hergestellte Bohrung am Werkstück zur Feinbohrbearbeitung.

Die Werkzeugspindeln 18a, 18b sind dabei Motorspindeln, welche die Motoreinrichtung 66 umfassen. Über diese lässt sich durch Positionseinstellung der Stange 62 die Position der Stange 122 des Feinbohrwerkzeugs 80 gezielt positionieren, um insbesondere die Position quer dazu in der Richtung 114 der Schneiden 134a, 134b einstellen zu können. Dadurch lässt sich ein Bohrungsdurchmesser genau einstellen und beispielsweise auch ein Schneidenverschleiß kompensieren.

Nach Beendigung des Feinbohrvorgangs wird beispielsweise das Werkstück bzw. werden die Werkstücke über den Werkstückträger 32 zu der Reinigungseinrichtung 50 verfahren und dort gereinigt. Beispielsweise erfolgt die Reinigung über Fluidstrahlbeaufschlagung. Dadurch lässt sich das Werkstück von Spänen der spanenden Vorbearbeitung befreien. Dadurch wiederum lässt sich beim nachfolgenden Honen eine undefinierte Riefenbildung aufgrund Einlagerung dieser Späne in Honleisten verhindern.

Nach der Feinbohrbearbeitung eines Werkstücks werden an den Werkzeugspindeln 18a und 18b (bei einem Doppelspindler) Honwerkzeuge 82 eingewechselt. Diese Einwechslung erfolgt beispielsweise zeitparallel zu der Reinigung.

Die Honwerkzeuge 82 werden dann in entsprechende Bohrungen der Werkstücke eingetaucht. Über eine Staudruckmessung kann eine Durchmesserbestimmung erfolgen.

Es erfolgt dann eine Honbearbeitung der Werkstücke. Dabei erfolgt eine oszillierende Hubbewegung zwischen dem Werkstückträger 32 und den Werkzeugspindeln 18a, 18b.

Die Querzustellung einer oder mehrerer Honleisten 100 erfolgt dabei über die Stange 88, welche wiederum über die Stange 62 an die Motoreinrichtung 66 der entsprechenden Werkzeugspindel 18a bzw. 18b gekoppelt ist.

Bei der erfindungsgemäßen Lösung sitzen die Werkzeuge 56 starr an der Werkzeugspindel 52. Die Werkstücke sitzen an dem Werkstückträger 32 ebenfalls starr. Während unterschiedlicher Bearbeitungsschritte wird die Aufspannung nicht geändert.

Ein Werkstück lässt sich effektiv zeitsparend bearbeiten. Beispielsweise kann ein Schneidenverschleiß an einem Feinbohrwerkzeug 80 über die Motoreinrichtung 66 durch Zustellung kompensiert werden.

Ein Honwerkzeug 82 kann nachfolgend einem Vorbereitungsvorgang den Durchmesser einer Bohrung ermitteln und die entsprechenden Resultate an die Steuerungseinrichtung 41 weiterleiten. Diese kann dann beim nächsten Vorbereitungsvorgang am nächsten Werkstück für eine Nachstellung der Schneiden des Feinbohrwerkzeugs 80 sorgen.

Bei der Honbearbeitung durch das Honwerkzeug 82 ist über die Motoreinrichtung 66 der Anpressdruck an ein Werkstück steuerbar.

Es lassen sich auch mehr als zwei unterschiedliche Bearbeitungsvorgänge an einem Werkstück innerhalb des Bearbeitungszentrums 10 bei unveränderter Aufspannung des Werkstücks an dem Werkstückträger 32 durchführen.

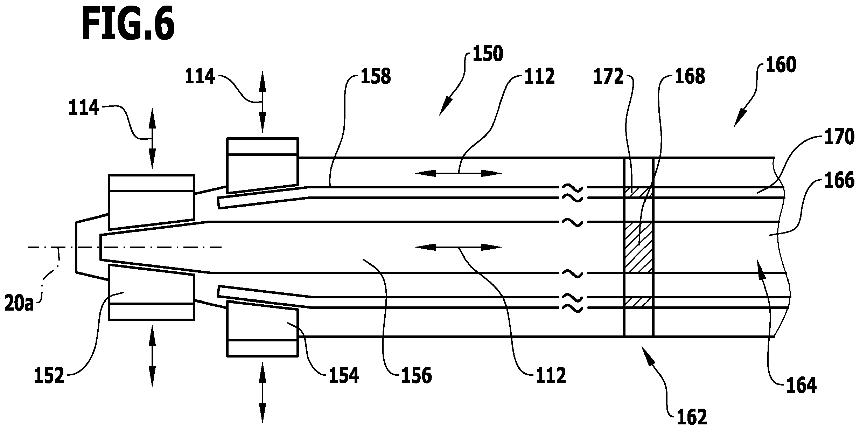

Ein Ausführungsbeispiel eines Werkzeugs, welches in Figur 6 gezeigt und dort mit 150 bezeichnet ist, umfasst einen Satz erster Werkzeugelemente 152 und einen Satz zweiter Werkzeugelemente 154. Die ersten Werkzeugelemente 152 sind an eine Stange 156 gekoppelt und über diese in der Richtung 114 quer verschieblich. Die Stange 156 selber ist in der Richtung 112 linear verschieblich. Die Stange 156 ist in einer Hohlstange 158 geführt. Diese Hohlstange 158 ist ebenfalls in der Richtung 112 verschieblich. Sie ist an die zweiten Werkzeugelemente 154 gekoppelt, welche dadurch parallel zur Richtung 118 verschieblich sind.

Durch die Hohlstange 158 sind die Positionen der zweiten Werkzeugelemente 154 in der Richtung 114 verstellbar. Durch die Stange 156 sind die Positionen der ersten Werkzeugelemente 152 in der Richtung 114 verstellbar. Die Position der Stange 156 und die Position der Hohlstange 158 in der Richtung 112 ist dabei unabhängig voneinander einstellbar, so dass auch die Querposition der ersten Werkzeugelemente 152 und der zweiten Werkzeugelemente 154 unabhängig voneinander einstellbar ist.

Eine entsprechende Werkzeugspindel 160, welche das Werkzeug 150 hält, weist eine Schnittstelle 162 für das Werkzeug 150 auf.

Die Werkzeugspindel 160 umfasst eine Beaufschlagungseinrichtung, welche als Ganzes mit 164 bezeichnet ist. Die Beaufschlagungseinrichtung 164 weist eine erste Teileinheit 166 auf, welche beispielsweise als Stange ausgebildet ist und linear verschieblich ist. Die erste Teileinheit 166 ist über eine erste Schnittstellen-Teileinheit 168 der Schnittstelle 162 an die Stange 156 ankoppelbar.

Die Beaufschlagungseinrichtung 164 umfasst ferner eine zweite Teileinheit 170. Diese zweite Teileinheit 170 umfasst beispielsweise eine Hohlstange, in welcher die erste Teileinheit 166 geführt ist. Die zweite Teileinheit 170 ist über eine zweite Schnittstellen-Teileinheit 172 an die Hohlstange 158 des Werkzeugs 150 ankoppelbar.

Das Werkzeug 150 ist als Ganzes mit dem Satz von ersten Werkzeugelementen 152 und dem Satz von zweiten Werkzeugelementen 154 um die Rotationsachse 18a bzw. 18b rotierbar.

Über das Werkzeug 150 lässt sich an einem Werkstück eine Doppelbearbeitung durchführen.

Die Verstellbarkeit eines Werkzeugelements kann auch auf andere Weise als über eine Stange erfolgen. Beispielsweise werden die zweiten Werkzeugelemente 154 über eine Stange verstellt und die Verstellung der ersten Werkzeugelemente 152 ist fluidbetätigt.

### Bezugszeichenliste

- 10: Bearbeitungszentrum
- 12: Maschinenbett
- 14: Maschinengestell
- 16: Werkzeugträgereinrichtung
- 18a: erste Werkzeugspindel
- 18b: zweite Werkzeugspindel
- 20a: Rotationsachse
- 20b: Rotationsachse
- 22: Schlitten
- 24: Schlittenführung
- 26: Antriebseinrichtung
- 28: Schlitten
- 30: Schlittenführung
- 32: Werkstückträger
- 34: Lagereinrichtung
- 36: Werkzeug
- 38: Arbeitsraum
- 40: Werkzeugwechseleinrichtung
- 41: Steuerungseinrichtung
- 42: Schaltkasten
- 44: Vorderseite
- 46: Rückseite
- 48: Zusatzeinrichtung
- 50: Reinigungseinrichtung
- 52: Werkzeugspindel
- 54: Schnittstelle
- 56: Werkzeug
- 58: Gehäuse
- 60: Beaufschlagungseinrichtung
- 62: Stange (Werkzeugspindel)
- 64: Stange (Werkzeug)
- 66: Motoreinrichtung
- 68: Elektromotor
- 70: Kugelgewindetrieb
- 72: Antriebseinrichtung
- 74: Druckluft-Schnittstelle
- 75: Kühlschmierstoff-Schnittstelle
- 76: Luftzuführungseinrichtung
- 77: Kanal
- 78: Vorbearbeitungswerkzeug
- 80: Feinbohrwerkzeug
- 82: Honwerkzeug
- 84: Schnittstelle
- 86: Druckluft-Schnittstelle
- 88: Stange
- 90: Bereich
- 92: Aufnahmeraum
- 94: Ringfläche
- 96: Ende
- 98: Federeinrichtung
- 100: Honleiste
- 102: Schneideneinrichtung
- 104: erster konischer Bereich
- 106: zweiter konischer Bereich
- 108: erster gegenkonischer Bereich
- 110: zweiter gegenkonischer Bereich
- 112: Richtung
- 114: Richtung
- 116: Öffnung
- 118: Kanal
- 119: Öffnung
- 120: Schnittstelle
- 121: Kühlschmierstoff-Schnittstelle
- 122: Stange
- 124: Bereich
- 126: Ringfläche
- 128: Ende
- 130: Aufnahmeraum
- 132: Federeinrichtung
- 134a: Schneide
- 134b: Schneide
- 150: Werkzeug
- 152: erstes Werkzeugelement
- 154: zweites Werkzeugelement
- 156: Stange
- 158: Hohlstange
- 160: Werkzeugspindel
- 162: Schnittstelle
- 164: Beaufschlagungseinrichtung
- 166: erste Teileinheit
- 168: erste Schnittstellen-Teileinheit
- 170: zweite Teileinheit
- 172: zweite Schnittstellen-Teileinheit

## Patentansprüche

1. Werkzeugmaschine, umfassend mindestens eine Werkzeugspindel (18a, 18b; 52), an welcher ein Werkzeug (56; 80; 82) lösbar fixierbar ist und über welche das Werkzeug (56; 80; 82) rotierbar ist, und mindestens einen Werkstückträger (32), wobei die mindestens eine Werkzeugspindel (18a; 18b; 52) und der mindestens eine Werkstückträger (32) relativ zueinander verschieblich sind,
wobei die mindestens eine Werkzeugspindel (18a; 18b) an einerTrägereinrichtung (16) gehalten ist und in einer ersten Richtung (X) und in einer quer zur ersten Richtung (X) liegenden zweiten Richtung (Y) verschieblich ist, der mindestens eine Werkstückträger (32) in einer quer zur ersten Richtung (X) und quer zur zweiten Richtung (Y) liegenden Richtung (Z) verschieblich an einem Maschinenbett (12) gehalten ist, die mindestens eine Werkzeugspindel (52) ein Gehäuse (58) und eine in dem Gehäuse (58) gelagerte Beaufschlagungseinrichtung (60; 164) umfasst, welche auf mindestens eine linear bewegliche Stange (64) eines Werkzeugs (56), welches an der mindestens einen Werkzeugspindel (52) fixiert ist, einwirkt, die mindestens eine Werkzeugspindel (52) eine Motoreinrichtung (66) umfasst, welche in dem Gehäuse (58) angeordnet ist, welche an die Beaufschlagungseinrichtung (60) gekoppelt ist und über die Beaufschlagungseinrichtung (60) eine lineare Verschiebung der mindestens einen Stange (64) antreibt, und wobei ein Satz von Werkzeugen (56) vorgesehen ist, welcher mindestens ein erstes Werkzeug (78) und ein zweites Werkzeug (82) umfasst, durch welche unterschiedliche Bearbeitungsvorgänge an einem Werkstück durchführbar sind, wobei die Werkzeuge (56) jeweils an der mindestens einen Werkzeugspindel (52) fixierbar sind und die Werkzeuge (56) jeweils mindestens eine Stange (64) aufweisen, aufweiche die Beaufschlagungseinrichtung (60) der mindestens einen Werkzeugspindel (52) wirkt, wenn ein Werkzeug (56) an der mindestens einen Werkzeugspindel (52) fixiert ist.

2. Werkzeugmaschine nach Anspruch 1, **dadurch gekennzeichnet, dass** die Motoreinrichtung (66) einen Elektromotor (68) umfasst.

3. Werkzeugmaschine nach Anspruch 1 oder 2, **dadurch gekennzeichnet, dass** die Beaufschlagungseinrichtung (60) mindestens eine linear bewegliche Stange (62) aufweist, an welche die mindestens eine Stange (64) des Werkzeugs (56) koppelbar ist.

4. Werkzeugmaschine nach einem der vorangehenden Ansprüche, **dadurch gekennzeichnet, dass** die mindestens eine Stange (64) des Werkzeugs (56) eine Druckstange oder Druck-Zug-Stange ist, mittels welcher mindestens ein Werkzeugelement verstellbar ist, und insbesondere, dass das mindestens eine Werkzeugelement eine Schneide (134a; 134b) oder Schneideneinrichtung (102) ist oder umfasst.

5. Werkzeugmaschine nach einem der vorangehenden Ansprüche, **dadurch gekennzeichnet, dass** der Satz von Werkzeugen (56) mindestens ein Vorbearbeitungswerkzeug (78) und ein Honwerkzeug (82) umfasst, und insbesondere, dass der Satz von Werkzeugen (56) mindestens ein Feinbohrwerkzeug (80) umfasst, und insbesondere, dass die Werkzeuge (56) jeweils mindestens eine Schneide (134a; 134b) oder Schneideneinrichtung (102) aufweisen, welche an die mindestens eine Stange (64) des Werkzeugs (56) gekoppelt ist, wobei die mindestens eine Schneide (134a; 134b) oder Schneideneinrichtung (102) überdie mindestens eine Stange (64) in einer Richtung (114) quer zu einer Rotationsachse (18a; 18b) des Werkzeugs (52) verstellbar ist.

6. Werkzeugmaschine nach einem der vorangehenden Ansprüche, **dadurch gekennzeichnet, dass** eine Reinigungseinrichtung (50)zur Reinigung eines Werkstücks nach einer Bearbeitung mit einem ersten Werkzeug (80) vor der Bearbeitung mit einem zweiten Werkzeug (82) und/odereine Fluidstrahleinrichtung und/oder eine Lasereinrichtung an einer Vorderseite (44) der Werkzeugmaschine angeordnet ist und durch den Werkstückträger (32) anfahrbar ist.

7. Werkzeugmaschine nach einem der vorangehenden Ansprüche, **dadurch gekennzeichnet, dass** die mindestens eine Werkzeugspindel (52) eine Druckluftschnittstelle (74) für ein Werkzeug (56) aufweist, und insbesondere, dass ein Werkzeug (56) eine Schnittstelle (86) zur Einkopplung von Druckluft aufweist, und insbesondere dass ein Werkzeug mindestens eine Austrittsöffnung (116) für Druckluft aufweist.

8. Werkzeugmaschine nach einem der vorangehenden Ansprüche, **gekennzeichnet durch** eine Steuerungseinrichtung (41), durch welche über die Beaufschlagungseinrichtung (60) eine Position der Stange (64) des Werkzeugs (56) einstellbar ist.

9. Werkzeugmaschine nach einem der vorangehenden Ansprüche, **dadurch gekennzeichnet, dass** mindestens ein Werkzeug (150) vorgesehen ist, welches mindestens ein erstes Werkzeugelement (152) und ein zweites Werkzeugelement (154) aufweist, welche durch die Beaufschlagungseinrichtung (164) unabhängig voneinander verstellbar sind.

10. Verfahren zum Bearbeiten eines Werkstücks mit unterschiedlichen Werkzeugen, bei dem das Werkstück in dergleichen Aufspannung gehalten wird und das Werkstück zuerst mit einem ersten Werkzeug und dann mit einem zweiten Werkzeug bearbeitet wird, wobei das erste Werkzeug und das zweite Werkzeug jeweils an einer Werkzeugspindel gehalten werden und die Werkzeugspindel die Rotation des entsprechenden Werkzeugs bewirkt und über eine in die Werkzeugspindel integrierte Motoreinrichtung auf mindestens eine linear bewegliche Stange des entsprechenden Werkzeugs wirkt und diese verschiebt, wobei die Motoreinrichtung in einem Gehäuse der Werkzeugspindel angeordnet ist, wobei die lineare Verschiebung der mindestens einen Stange eine Querbewegung mindestens einer Schneide oder einer Schneideneinrichtung des entsprechenden Werkzeugs bezogen auf eine Rotationsachse bewirkt, wobei die mindestens eine Werkzeugspindel an einer Trägereinrichtung gehalten ist und in einer ersten Richtung (X) und in einer quer zur ersten Richtung (X) liegenden zweiten Richtung (Y) verschieblich ist, und wobei das Werkstück in einerquerzurersten Richtung (X) und querzurzweiten Richtung (Y) liegenden Richtung (Z) über einen Werkstückträger, welcher verschieblich an einem Maschinenbett gehalten ist, verschieblich ist.

11. Verfahren nach Anspruch 10, **dadurch gekennzeichnet, dass** die Verschiebung der mindestens einen Stange gesteuert erfolgt, und insbesondere, dass über die Verschiebung der mindestens einen Stange eine Anpresskraft des Werkzeugs an ein Werkstück eingestellt wird, und insbesondere, dass über die Verschiebung der mindestens einen Stange ein Werkzeugverschleiß kompensiert wird.

12. Verfahren nach Anspruch 10 oder 11, **dadurch gekennzeichnet, dass** das erste Werkzeug ein Feinbohrwerkzeug ist und/oder dass das zweite Werkzeug ein Honwerkzeug ist.

13. Verfahren nach einem der Ansprüche 10 bis 12, **dadurch gekennzeichnet, dass** das Werkstück nach der Bearbeitung mit dem ersten Werkzeug und vor Bearbeitung mit dem zweiten Werkzeug gereinigt wird.

14. Verfahren nach einem der Ansprüche 10 bis 13, **dadurch gekennzeichnet, dass** das erste Werkzeug und das zweite Werkzeug zeitlich nacheinander von dergleichen Werkzeugspindel gehalten werden.

## Claims

1. Machining centre comprising at least one tool spindle (18a, 18b; 52), to which a tool (56; 80; 82) can be detachably fixed and by means of which the tool (56; 80; 82) can be rotated, and at least one workpiece support (32), wherein the at least one tool spindle (18a; 18b; 52) and the at least one workpiece support (32) are displaceable relative to one another, wherein the at least one tool spindle (18a; 18b) is held on a support arrangement (16) and is displaceable in a first direction (X) and in a second direction (Y) lying transversely to the first direction (X), the at least one workpiece support (32) is held on a machine bed (12) so as to be displaceable in a direction (Z) lying transversely to the first direction (X) and transversely to the second direction (Y), the at least one tool spindle (52) comprises a housing (58) and a loading device (60; 164) linearly displaceably mounted in the housing (58),the loading device acting on at least one linearly movable rod (64) of a tool (56), which is fixed to the at least one tool spindle (52), the at least one tool spindle (52) comprises a motor device (66), which is arranged in the housing (58) and which is coupled to the loading device (60) by means of a ball screw device (70) and drives a linear displacement arrangement of the at least one rod (64) by means of the loading device (60), and wherein a set of tools (56) is provided, which comprises at least one first tool (78) and one second tool (82), by means of which different machining operations can be conducted on a workpiece, wherein the tools (56) can each be fixed to the at least one tool spindle (52) and the tools (56) each have at least one rod (64), on which the loading device (60) of the at least one tool spindle (52) acts when a tool (56) is fixed to the at least one tool spindle (52).

2. Machining centre according to claim 1, **characterised in that** the motor device (66) comprises an electric motor (68).

3. Machining centre according to claim 1 or 2, **characterised in that** the loading device (60) has at least one linearly movable rod (62), to which the at least one rod (64) of the tool (56) can be coupled.

4. Machining centre according to one of the preceding claims, **characterised in that** the at least one rod (64) of the tool (56) is a push rod or push-pull rod, by means of which at least one tool element is adjustable, and in particular **in that** the at least one tool element is or comprises a cutting edge (134a; 134b) or cutting edge arrangement (102).

5. Machining centre according to one of the preceding claims, **characterised in that** the set of tools (56) comprises at least one preliminary machining tool (78) and a honing tool (82), and in particular **in that** the set of tools (56) comprises at least one precision drilling tool (80), and in particular **in that** the tools (56) each have at least one cutting edge (134a; 134b) or cutting edge arrangement (102), which is coupled to the at least one rod (64) of the tool (56), wherein the at least one cutting edge (134a; 134b) or cutting edge arrangement (102) is adjustable in a direction (114) transverse to a rotational axis (18a; 18b) of the tool (52) by means of the at least one rod (64).

6. Machining centre according to one of the preceding claims, **characterised in that** a cleaning device (50) for cleaning a workpiece after a machining operation with a first tool (80) before the machining operation with a second tool (82) and/or a fluid jet device and/or a laser device is arranged on a front side (44) of the machining centre and can be approached by the workpiece support (32).

7. Machining centre according to one of the preceding claims, **characterised in that** the at least one tool spindle (52) has a compressed air interface (74) for a tool (56), and in particular **in that** a tool (56) has an interface (86) for coupling in compressed air, and in particular **in that** a tool has at least one outlet (116) for compressed air.

8. Machining centre according to one of the preceding claims, **characterised by** a control device (41), by which a position of the rod (64) of the tool (56) is adjustable by means of the loading device (60).

9. Machining centre according to one of the preceding claims, **characterised in that** at least one tool (150) is provided, which has at least one first tool element (152) and one second tool element (154), which are adjustable independently of one another by the loading device (164).

10. Method for machining a workpiece on a machining centre with different tools, in which the workpiece is held in the same chucking arrangement and the workpiece is machined firstly with a first tool and then with a second tool, wherein the first tool and the second tool are respectively held on a tool spindle, and the tool spindle effects the rotation of the corresponding tool and by means of a motor device integrated into the tool spindle acts on at least one linearly movable rod of the corresponding tool by means of a ball screw device and displaces this, wherein the motor device is arranged in a housing of the tool spindle, wherein the linear displacement of the at least one rod effects a transverse movement of at least one cutting edge or cutting edge arrangement of the corresponding tool in relation to a rotational axis, wherein the at least one tool spindle is held on a support arrangement and is displaceable in a first direction (X) and in a second direction (Y) lying transversely to the first direction (X), and wherein the workpiece, by means of a workpiece support held in displaceable manner on a machine bed, is displaceable in a direction (Z) lying transverse to the first direction (X) and transverse to the second direction (Y).

11. Method according to claim 10, **characterised in that** the displacement of the at least one rod occurs in a controlled manner, and in particular **in that** a contact pressure of the tool onto a workpiece is adjusted by means of the displacement of the at least one rod, and in particular that wear of a tool is compensated by means of the displacement of the at least one rod.

12. Method according to claim 10 or 11, **characterised in that** the first tool is a precision drilling tool and/or **in that** the second tool is a honing tool.

13. Method according to one of claims 10 to 12, **characterised in that** the workpiece is cleaned after the machining operation with the first tool and before machining with the second tool.

14. Method according to one of claims 10 to 13 **characterised in that** the first tool and the second tool are held by the same tool spindle one after the another in time.

## Revendications

1. Centre d'usinage, comprenant au moins une broche d'outil (18a, 18b ; 52), à laquelle un outil (56 ; 80 ; 82) peut être fixé de manière amovible et par le biais de laquelle l'outil (56 ; 80 ; 82) peut être mis en rotation, et au moins un porte-pièce (32), dans laquelle l'au moins une broche d'outil (18a ; 18b ; 52) et l'au moins un porte-pièce (32) sont déplaçables l'un par rapport à l'autre, dans laquelle l'au moins une broche d'outil (18a ; 18b) est retenue au niveau d'un dispositif porteur (16) et est déplaçable dans une première direction (X) et dans une deuxième direction (Y) transversale à la première direction (X), l'au moins un porte-pièce (32) est retenu déplaçable dans une direction (Z) transversale à la première direction (X) et transversale à la deuxième direction (Y) au niveau d'un banc de machine (12), l'au moins une broche d'outil (52) comprend un carter (58) et un dispositif de sollicitation (60 ; 164) logé linéairement déplaçable dans le carter (58), lequel agit sur au moins une barre (64) linéairement mobile d'un outil (56), lequel est fixé à l'au moins une broche d'outil (52), l'au moins une broche d'outil (52) comprend un dispositif moteur (66), lequel est agencé dans le carter (58), lequel est couplé au dispositif de sollicitation (60) par le biais d'une vis à billes (70) et entraîne un déplacement linéaire de l'au moins une barre (64) par le biais du dispositif de sollicitation (60), et dans laquelle un jeu d'outils (56) est prévu, lequel comprend au moins un premier outil (78) et un deuxième outil (82), par lesquels différentes opérations d'usinage peuvent être réalisées sur une pièce, dans laquelle les outils (56) peuvent être fixés respectivement à l'au moins une broche d'outil (52) et les outils (56) présentent respectivement au moins une barre (64), sur laquelle le dispositif de sollicitation (60) de l'au moins une broche d'outil (52) agit, lorsqu'un outil (56) est fixé à l'au moins une broche d'outil (52).

2. Centre d'usinage selon la revendication 1, **caractérisé en ce que** le dispositif moteur (66) comprend un moteur électrique (68).

3. Centre d'usinage selon la revendication 1 ou 2, **caractérisé en ce que** le dispositif de sollicitation (60) présente au moins une barre (62) linéairement mobile, à laquelle l'au moins une barre (64) de l'outil (56) peut être couplée.

4. Centre d'usinage selon l'une quelconque des revendications précédentes, **caractérisé en ce que** l'au moins une barre (64) de l'outil (56) est une barre de compression ou barre de compression-traction, au moyen de laquelle au moins un élément d'outil peut être déplacé, et en particulier que l'au moins un élément d'outil est ou comprend un tranchant (134a ; 134b) ou dispositif de coupe (102).

5. Centre d'usinage selon l'une quelconque des revendications précédentes, **caractérisé en ce que** le jeu d'outils (56) comprend au moins un outil de pré-usinage (78) et un outil de pierrage (82), et en particulier que le jeu d'outils (56) comprend au moins un outil d'alésage de précision (80), et en particulier que les outils (56) présentent respectivement au moins un tranchant (134a ; 134b) ou dispositif de coupe (102), lequel est couplé à l'au moins une barre (64) de l'outil (56), dans laquelle l'au moins un tranchant (134a ; 134b) ou dispositif de coupe (102) peut être déplacé par le biais de l'au moins une barre (64) dans une direction (114) transversalement à un axe de rotation (18a ; 18b) de l'outil (52).

6. Centre d'usinage selon l'une quelconque des revendications précédentes, **caractérisé en ce qu'**un dispositif de nettoyage (50) pour le nettoyage d'une pièce après un usinage avec un premier outil (80) avant l'usinage avec un deuxième outil (82) et/ou un dispositif de jet de fluide et/ou un dispositif laser est agencé au niveau d'une face avant (44) du centre d'usinage et peut être approché par le porte-outil (32).

7. Centre d'usinage selon l'une quelconque des revendications précédentes, **caractérisé en ce que** l'au moins une broche d'outil (52) présente une interface d'air comprimé (74) pour un outil (56), et en particulier qu'un outil (56) présente une interface (86) pour l'introduction d'air comprimé, et en particulier qu'un outil présente au moins une ouverture de sortie (116) pour air comprimé.

8. Centre d'usinage selon l'une quelconque des revendications précédentes, **caractérisé par** un dispositif de commande (41), par lequel une position de la barre (64) de l'outil (56) est réglable par le biais du dispositif de sollicitation (60).

9. Centre d'usinage selon l'une quelconque des revendications précédentes, **caractérisé en ce qu'**au moins un outil (150) est prévu, lequel présente au moins un premier élément d'outil (152) et un deuxième élément d'outil (154), lesquels sont déplaçables indépendamment l'un de l'autre par le dispositif de sollicitation (164).

10. Procédé d'usinage d'une pièce au niveau d'un centre d'usinage avec différents outils, dans lequel la pièce est retenue dans la même fixation et la pièce est usinée d'abord avec un premier outil et ensuite avec un deuxième outil, dans lequel le premier outil et le deuxième outil sont retenus respectivement au niveau d'une broche d'outil et la broche d'outil provoque la rotation de l'outil correspondant et agit sur au moins une barre linéairement mobile de l'outil correspondant par le biais d'un dispositif moteur intégré dans la broche d'outil et la déplace, dans lequel le dispositif moteur est agencé dans un carter de la broche d'outil, dans lequel le déplacement linéaire de l'au moins une barre provoque un mouvement transversal d'au moins un tranchant ou d'un dispositif de coupe de l'outil correspondant par rapport à un axe de rotation, dans lequel l'au moins une broche d'outil est retenue au niveau d'un dispositif porteur et est déplaçable dans une première direction (X) et dans une deuxième direction (Y) transversale à la première direction (X), et dans lequel la pièce est déplaçable dans une direction (Z) transversale à la première direction (X) et transversale à la deuxième direction (Y) par le biais d'un porte-outil, lequel est retenu déplaçable au niveau d'un banc de machine.

11. Procédé selon la revendication 10, **caractérisé en ce que** le déplacement de l'au moins une barre a lieu de manière commandée, et en particulier qu'une force d'application de l'outil sur une pièce est réglée par le déplacement de l'au moins une barre, et en particulier qu'une usure d'outil est compensée par le déplacement de l'au moins une barre.

12. Procédé selon la revendication 10 ou 11, **caractérisé en ce que** le premier outil est un outil d'alésage de précision et/ou que le deuxième outil est un outil de pierrage.

13. Procédé selon l'une quelconque des revendications 10 à 12, **caractérisé en ce que** la pièce est nettoyée après l'usinage avec le premier outil et avant l'usinage avec le deuxième outil.

14. Procédé selon l'une quelconque des revendications 10 à 13, **caractérisé en ce que** le premier outil et le deuxième outil sont retenus l'un après l'autre dans le temps par la même broche d'outil.
